# EUROPÄISCHE PATENTSCHRIFT

(11) **EP 0 741 003 B1**
(45) Veröffentlichungstag und Bekanntmachung des Hinweises auf die Patenterteilung: **24.07.2002**
(21) Anmeldenummer: 96106164.5
(22) Anmeldetag: 19.04.1996
(51) Int. Cl.: B32B 19/00, E06B 5/16

(54) **Brandschutzelement mit Schichtstruktur, insbesondere als Einlage für Feuerschutztüren, sowie Halbzeug hierfür**
Fire protection element with layered structure, particularly as insert for fireproof doors and semi-product for use in the element
Elément stratifié de protection contre le feu, en particulier comme pièce intercalaire pour portes coupe-feu ainsi que le demi-produit utilisé à cet effet

(30) Priorität: 05.05.1995 DE 29507498 U
(43) Veröffentlichungstag der Anmeldung: 06.11.1996
(73) Patentinhaber: SAINT-GOBAIN ISOVER G+H Aktiengesellschaft, 67059 Ludwigshafen (DE)
(72) Erfinder: Kummermehr, Hans, 67059 Ludwigshafen (DE); Bihy, Lothar, Dipl.-Phys., 67657 Kaiserslautern (DE); Gilbert, Alwin, Dipl.-Ing., 67354 Römerberg (DE)
(74) Vertreter: Bockhorni, Josef, Dipl.-Ing.

(56) Entgegenhaltungen:
- EP-A- 0 353 540
- EP-A- 0 485 867
- WO-A-82/00040

## Beschreibung

Die Neuerung betrifft ein Brandschutzelement mit Schichtstruktur, insbesondere als Einlage für Feuerschutztüren, das zumindest zwei äußere Schichten aus gebundener Mineralwolle und zumindest eine mittlere Schicht aus anorganischem Material umfaßt.

Zur Erzielung eines hohen Feuerwiderstandes von derartigen Brandschutzelementen ist es bekannt, Wärmedämmlagen aus Mineralwolle mit Schichten aus Brandschutzmitteln zu kombinieren, wodurch die Wärmeaufnahmekapazität wesentlich erhöht wird, da bei einem Temperaturanstieg im Brandfalle endotherme chemische Reaktionen innerhalb der Brandschutzmittel ablaufen. Bekanntlich bestimmt sich die Feuerwiderstandsfähigkeit nach der Dauer, bei der bei einem bestimmten Temperaturanstieg auf einer Seite des Brandschutzelementes, beispielsweise einer Feuerschutztüre, die andere Seite des Brandschutzelementes unter einer definierten Grenztemperatur, z. B. 180 °C, bleibt. Die Standzeit des Brandschutzelementes bis zum Erreichen der Grenztemperatur auf der kalten Seite in Minuten ergibt die Feuerwiderstandsklasse, wobei nach DIN 4102, Teil 5, z. B. die Einstufung in die Feuerwiderstandsklasse F 30 eine 30minütige Standzeit bedeutet, F 90 eine 90minütige Standzeit usw.

Als Material für eine Schicht, die durch Speicherung latenter Wärme infolge Umwandlung den Temperaturanstieg an der kalten Seite verzögern kann, schlägt die DE-OS 38 24 598 als Brandschutzschicht ein Gemisch aus einem wasserabspaltenden Hydroxid, wie Aluminiumhydroxid und Wasserglas oder Kieselsol vor, die als verbindende Schicht zwischen zwei Körpern aus gebundener Mineralwolle angeordnet ist. Eine derartige Brandschutzschicht hat sich bislang gut bewährt, da durch die Umwandlung des Aluminiumhydroxids im Brandfall eine chemische Reaktion mit stark endothermem Charakter zur Verfügung steht.

Bei der Herstellung der bekannten Brandschutzelemente wird das wasserabspaltende Hydroxid, wie Aluminiumhydroxid, mit Wasserglas oder Kieselsol zu einer plastischen Brandschutzmasse verarbeitet, die dann auf einer Seite einer Mineralwolleplatte aufgetragen wird. Auf die noch feuchte Schicht wird sodann eine zweite Mineralwolleplatte aufgelegt und durch leichtes Andrücken mit der Brandschutzschicht aus der plastischen Masse verbunden. Das Verfestigen z. B. des Kieselsols - also der Übergang desselben in den vernetzten Zustand des SiO₂ - erfolgt innerhalb eines Zeitraumes von ca. 2 bis 8 Stunden.

Ein derartiger Naßauftrag der plastischen Brandschutzmasse bringt jedoch eine beachtliche Durchfeuchtung der Mineralwolle mit sich, weswegen das frisch hergestellte Brandschutzelement einer energie- und zeitintensiven Trocknungs- und Aushärteprozedur unterworfen werden muß. Ferner ist bei einer kontinuierlichen Fertigung der Brandschutzelemente aufgrund des Auftrages der plastischen Brandschutzmasse die Liniengeschwindigkeit relativ gering, beispielsweise 1 m pro Minute im Gegensatz zu 20 m pro Minute bei der Herstellung der hierfür verwendeten Mineralwolleplatten.

Man hat daher versucht, die Brandschutzmasse derart zu modifizieren, daß diese schneller abbindet und weniger Trocknungsenergie benötigt. Die DE-OS 40 36 088 schlägt hierzu ein Brandschutzmittel aus einer Mischung eines wasserabspaltenden Hydroxids, insbesondere Aluminiumhydroxid, mit einem Magnesiabinder, insbesondere einem Gemisch aus Magnesiumoxid und Magnesiumsulfat, vor. Bei dem Abbindevorgang dieses Brandschutzmittels handelt es sich um eine exotherme chemische Reaktion, welche Wärme an die Umgebung abgibt und somit dazu beiträgt, überschüssiges Wasser, welches während der Abbindereaktion nicht chemisch verbraucht wird, zum Verdunsten zu bringen, und hierdurch aus der Reaktionszone des Brandschutzmittels zu entfernen. Dennoch ist hier ebenfalls ein Trocknungsvorgang - wenn auch ein kürzerer - erforderlich, der neben des Nachteils des Energieverbrauches auch die kontinuierliche Produktionsgeschwindigkeit wiederum beeinflußt.

Aus EP 0 353 540 A2 ist ein Brandschutzelement und ein Verfahren zu dessen Herstellung bekannt, bei welchem die die mittlere Schicht bildende und bei Temperatureinwirkung wasserabspaltende Schicht als feuchte plastische Masse auf eine erste Mineralwollschicht aufgebracht wird und anschließend eine zweite Mineralwollschicht auf die plastische Masse aufgedrückt wird. Abschließend wird die Anordnung aus den drei Schichten erwärmt, um eine Verfestigung der plastischen Masse zu erzielen.

EP 0 485 867 A2 offenbart derartige anorganische Materialien, welche bei Temperatureinwirkung Wasser abspalten, in Form einer Mischung eines wasserabspaltenden Hydroxids, insbesondere Aluminiumhydroxid, mit einem Magnesiabinder, insbesondere einem Gemisch aus Magnesiumoxid und Magnesiumsulfat.

Ausgehend von diesem Stand der Technik ist es daher Aufgabe der vorliegenden Neuerung, ein Verfahren zur Herstellung eines Brandschutzelementes sowie ein Brandschutzelement zur Verfügung zu stellen, das sich einfacher und billiger herstellen läßt.

Die Lösung dieser Aufgabe erfolgt hinsichtlich des Brandschutzelementes durch die Merkmale des Schutzanspruches 9 und hinsichtlich des Verfahrens nach Anspruch 1.

Der Grundgedanke der vorliegenden Neuerung besteht somit darin, die als Brandschutzmasse dienende mittlere Schicht aus anorganischem Material für sich als Halbzeug separat herzustellen und dann als selbständig handelbare Platte zwischen die Schichten aus gebundener Mineralwolle anzuordnen. Damit sind zum einen die Fertigungsbereiche hinsichtlich der Mineralwolleplatten und der Brandschutzmasse entkoppelt, so daß die Taktzeiten für die Fertigung nicht mehr aufeinander abgestimmt werden müssen und zum anderen erfolgt keine Durchfeuchtung der Mineralwolleplatten, die durch erhebliche Trocknungsenergie wieder beseitigt werden muß.

Das Halbzeug in Form der Brandschutzschicht aus anorganischem Material ist plattenförmig ausgebildet und mindestens auf einer Großfläche mit einer offenporigen Verstärkung armiert, wobei hier vorzugsweise als Verstärkung ein Glasvlies oder Glasgewebe dient. Da die Abmessungen derartiger plattenförmiger Halbzeuge für Feuerschutztüren doch immerhin bei 100 x 200 cm liegen, ist es zweckmäßig, die Verstärkung auf beiden Großflächen vorzusehen. Ferner ist es vorteilhaft, das Gemisch für die Brandschutzschicht aus Aluminiumhydroxid und Wasserglas herzustellen, da Wasserglas der Schicht eine gewisse Elastizität verleiht, was für den Transport bei der genannten Flächenausdehnung des Halbzeuges und einer bevorzugten Dicke von 4 bis 5 mm günstig ist.

Weitere Einzelheiten und Vorteile der Neuerung werden nachfolgend anhand eines in der Zeichnung dargestellten Ausführungsbeispieles näher beschrieben und erläutert:

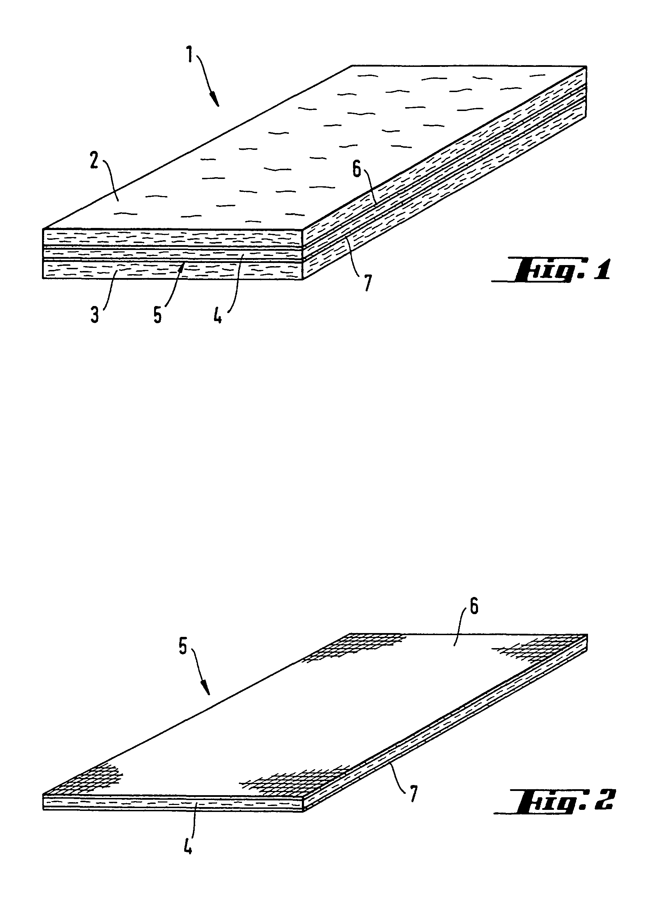

Es zeigt
- Fig. 1: in perspektivischer Darstellung ein Brandschutzelement mit Schichtstruktur als Einlage für Feuerschutztüren und
- Fig. 2: ebenfalls in perspektivischer Darstellung die mittlere Schicht aus anorganischem Material des Brandschutzelementes in Form eines selbständig handelbaren Halbzeuges.

Das Brandschutzelement 1 besteht aus zwei Dämmlagen in Form von Mineralwolleplatten 2 und 3, zwischen die eine mittlere Brandschutzschicht 4 in Form eines plattenförmigen Halbzeuges 5 eingelegt ist. Das Halbzeug 5 ist hergestellt aus einem Gemisch aus Aluminiumhydroxid und Wasserglas und ist beidseitig an seinen Großflächen mit einem Glasgewebe 6 und 7 armiert. Ein derartiges Halbzeug spaltet bei Temperatureinwirkung Wasser ab und bleibt dennoch formstabil. Im Gegensatz zu bekannten Brandschutzelementen aus wasserhaltigen Alkalisilikaten, die im Brandfall wärmedämmenden Schaum bilden, der durch Entwicklung eines Schäumdruckes in der Lage ist, Fugen, Spalten und sonstige Öffnungen und Durchgänge in Baukörpern vor dem Durchtritt von Feuer und Rauch wirksam zu schützen (DE-OS 26 36 430).

Die Herstellung des Halbzeuges 5 erfolgt derart, daß auf einem kontinuierlich laufenden Glasgewebe 7 die Schicht 4 in einer zähen Konsistenz aufgebracht wird, welche dann mit dem zweiten Glasgewebe 6 kaschiert wird. Der Verbund wird sodann kalibriert und etwa bei 130 °C getrocknet und schließlich auf beiden Seiten besäumt und zu Platten abgelenkt. Für die Brandschutzschicht verwendet man vorzugsweise 50 bis 90 Gew.-% Aluminiumhydroxid und 10 bis 50 Gew.-% Wasserglas, wobei Kieselsol oder Magnesiabinder je nach Anwendung ebenfalls möglich ist.

## Patentansprüche

1. Verfahren zur Herstellung eines Brandschutzelements mit Schichtstruktur, insbesondere als Einlage für Feuerschutztüren, das zumindest zwei äußere Schichten aus gebundener Mineralwolle und zumindest eine mittlere Schicht aus anorganischem Material umfaßt, mit den Schritten:
a) Bereitstellen der beiden äußeren Schichten (2, 3) aus gebundener Mineralwolle und
b) Anordnen der mittleren Schicht (4) aus dem anorganischen Material, das bei Temperatureinwirkung Wasser abspaltet zwischen den beiden äußeren Schichten (2,3),
**dadurch gekennzeichnet, daß** die mittlere Schicht (4) als vorgefertigtes Halbzeug (5) bereitgestellt wird, bevor es zwischen den äußeren Schichten (2,3) angeordnet wird, und daß die mittlere Schicht bei Temperatureinwirkung formstabil bleibt.

2. Verfahren nach Anspruch 1, **dadurch gekennzeichnet, daß** das Halbzeug vorgefertigt wird, indem das anorganische Material in einer zähen Konsistenz auf ein Glasgewebe (7) als Schicht (4) aufgebracht wird, dann kalibriert und getrocknet wird und dann zu Platten verarbeitet wird.

3. Verfahren nach Anspruch 2, **dadurch gekennzeichnet, daß** die Schicht vor dem Kalibrieren und Trocknen mit einem zweiten Glasgewebe (6) kaschiert wird.

4. Verfahren nach Anspruch 2 oder 3, **dadurch gekennzeichnet, daß** das Trocknen bei etwa 130°C erfolgt.

5. Verfahren nach einem der vorangehenden Ansprüche, **dadurch gekennzeichnet, daß** die mittlere Schicht aus einem Gemisch aus wasserabspaltendem Hydroxid wie Alumiumhydroxid, und einem Wasserglas, Kieselsol oder Magnesiabinder besteht.

6. Verfahren nach Anspruch 5, **dadurch gekennzeichnet, daß** die mittlere Schicht (4) aus 50 bis 90 Gew.-% wasserabspaltendem Hydroxid wie Aluminiumhydroxid und 10 bis 50 Gew.-% Binder, wie Wasserglas, Kieselsol oder Magnesiabinder besteht.

7. Verfahren nach einem der vorangehenden Ansprüche, **dadurch gekennzeichnet, daß** die mittlere Schicht (4) eine Dicke von 3 bis 5 mm, vorzugsweise 4 bis 5 mm, aufweist.

8. Verfahren nach einem der vorangehenden Ansprüche, **dadurch gekennzeichnet, daß** die äußeren Abmessungen der mittleren Schicht (4) 50 bis 100 cm x 150 bis 200 cm, vorzugsweise 100 cm x 200 cm, betragen.

9. Brandschutzelement mit Schichtstruktur, insbesondere als Einlage für Feuerschutztüren, das zumindest zwei äußere Schichten aus gebundener Mineralwolle und zumindest eine mittlere Schicht (4) aus anorganischem Material umfaßt, wobei die mittlere Schicht (4) aus einem anorganischen Material besteht, das bei Temperatureinwirkung Wasser abspaltet, **dadurch gekennzeichnet, daß** die mittlere Schicht (4) als vorgefertigtes Halbzeug (5) zwischen den äußeren Schichten (2, 3) aus gebundener Mineralwolle angeordnet ist und bei Temperatureinwirkung formstabil bleibt.

10. Brandschutzelement nach Anspruch 9, **dadurch gekennzeichnet, daß** das vorgefertigte Halbzeug plattenförmig ausgebildet ist und mindestens auf einer Großfläche mit einer offenporigen Verstärkung (6, 7) armiert ist.

11. Brandschutzelement nach Anspruch 10, **dadurch gekennzeichnet, daß** als Verstärkung (6,7) des vorgefertigten Halbzeugs ein Glasvlies oder Glasgewebe dient.

12. Brandschutzelement nach einem der Ansprüche 9 bis 11, **dadurch gekennzeichnet, daß** die Verstärkung (6, 7) auf beiden Großflächen vorgesehen ist.

13. Brandschutzelement nach einem der Ansprüche 9 bis 12, **dadurch gekennzeichnet, daß** das vorgefertigte Halbzeug aus einem Gemisch aus wasserabspaltendem Hydroxid wie Aluminiumhydroxid und einem Wasserglas, Kieselsol oder Magnesiabinder besteht.

14. Brandschutzelement nach Anspruch 13, **dadurch gekennzeichnet, daß** das vorgefertigte Halbzeug aus 50 bis 90 Gew.-% wasserabspaltendem Hydroxid wie Aluminiumhydroxid und 10 bis 50 Gew.-% Binder, wie Wasserglas, Kieselsol oder Magnesiabinder besteht.

15. Brandschutzelement nach einem der Ansprüche 9 bis 14, **dadurch gekennzeichnet, daß** das vorgefertigte Halbzeug eine Dicke von 3 bis 5 mm, vorzugsweise 4 bis 5 mm, aufweist.

16. Brandschutzelement nach einem der Ansprüche 9 bis 15, **dadurch gekennzeichnet, daß** die äußeren Abmessungen des vorgefertigten Halbzeugs 50 bis 100 cm x 150 bis 200 cm, vorzugsweise 100 cm x 200 cm, betragen.

## Claims

1. Method of manufacturing a fire protection element with a layered structure, particularly in the form of an insert for fireproof doors, which comprises at least two outer layers of bonded mineral wool and at least one central layer of inorganic material, including the following steps:
a) providing the two outer layers (2, 3) of bonded mineral wool and
b) arranging the central layer (4) of the inorganic material, which liberates water under the action of heat, between the two outer layers (2, 3),
**characterised in that** the central layer (4) is provided in the form of a prefabricated semifinished product, before it is arranged between the outer layers (2, 3), and that the central layer remains of stable shape under the action of heat.

2. Method as claimed in Claim 1, **characterised in that** the semifinished product is prefabricated by applying the inorganic material in a viscous consistency to a glass fabric (7) in the form of a layer (4), and is then calibrated and dried and then processed into plates.

3. Method as claimed in Claim 2, **characterised in that** the layer is laminated with a second glass fabric (6) before the calibration and drying.

4. Method as claimed in Claim 2 or 3, **characterised in that** the drying is effected at about 130°C.

5. Method as claimed in one of the preceding claims, **characterised in that** the central layer comprises a mixture of water-liberating hydroxide, such as aluminium hydroxide, and a waterglass, silica sol or magnesia binder.

6. Method as claimed in Claim 5, **characterised in that** the central layer (4) comprises 50 to 90% by wt. water-liberating hydroxide, such as aluminium hydroxide, and 10 to 50% by wt. binder, such as waterglass, silica sol or magnesia binder.

7. Method as claimed in one of the preceding claims, **characterised in that** the central layer (4) has a thickness of 3 to 5 mm, preferably 4 to 5 mm.

8. Method as claimed in one of the preceding claims, **characterised in that** the external dimensions of the central layer (4) are 50 to 100 cm x 150 to 200 cm, preferably 100 cm x 200 cm.

9. Fire protection element with a layered structure, particularly in the form of an insert for fireproof doors, which comprises at least two outer layers of bonded mineral wool and at least one central layer (4) of inorganic material, the central layer (4) comprising inorganic material which liberates water under the action of heat, **characterised in that** the central layer (4) is arranged between the outer layers (2, 3) of bonded mineral wool in the form of a prefabricated semifinished product (5) and remains of stable shape under the action of heat.

10. Fire protection element as claimed in Claim 9, **characterised in that** the prefabricated semifinished product is of plate shape and is sheathed on at least one large surface with an open pored reinforcement (6, 7).

11. Fire protection element as claimed in Claim 10, **characterised in that** a glass fleece or glass fabric is used as the reinforcement (6, 7) of the prefabricated semifinished product.

12. Fire protection element as claimed in one of Claims 9 to 11, **characterised in that** the reinforcement (6, 7) is provided on both large surfaces.

13. Fire protection element as claimed in one of Claims 9 to 12, **characterised in that** the prefabricated semifinished product comprises a mixture of water-liberating hydroxide, such as aluminium hydroxide, and a waterglass, silica sol or magnesia binder.

14. Fire protection element as claimed in Claim 13, **characterised in that** the prefabricated semifinished product comprises 50 to 90% by wt. water-liberating hydroxide, such as aluminium hydroxide, and 10 to 50% by wt. binder, such as waterglass, silica sol or magnesia binder.

15. Fire protection element as claimed in one of Claims 9 to 14, **characterised in that** the prefabricated semifinished product has a thickness of 3 to 5 mm, preferably 4 to 5 mm.

16. Fire protection element as claimed in one of Claims 9 to 15, **characterised in that** the outer dimensions of the prefabricated semifinished product are 50 to 100 cm x 150 to 200 cm, preferably 100 cm x 200 cm.

## Revendications

1. Procédé de fabrication d'un élément stratifié de protection contre l'incendie, servant en particulier de composant pour les portes coupe-feu, qui comprend au moins deux couches extérieures en laine minérale liée et au moins une couche centrale en matériau inorganique, comprenant les étapes consistant à :
a) préparer les deux couches extérieures (2,3) en laine minérale liée et à
b) disposer la couche centrale (4) en matériau inorganique, qui libère de l'eau entre les deux couches extérieures (2,3) sous l'action de la chaleur,
**caractérisé en ce que** la couche centrale (4) est un demi-produit préfabriqué (5), préparé avant d'être disposé entre les deux couches extérieures (2,3), et **en ce que** la couche centrale garde sa forme sous l'action de la chaleur.

2. Procédé selon la revendication 1, **caractérisé en ce que** le demi-produit est préfabriqué en appliquant le matériau inorganique sous forme visqueuse sur une toile de verre (7) comme couche (4), puis est calibré et séché puis façonné en plaques.

3. Procédé selon la revendication 2, **caractérisé en ce que** la couche est recouverte d'une deuxième toile de verre (6) avant d'être calibrée et séchée.

4. Procédé selon la revendication 2 ou 3, **caractérisé en ce que** le séchage s'effectue à environ 130°C.

5. Procédé selon l'une quelconque des revendications précédentes, **caractérisé en ce que** la couche centrale est composée d'un mélange d'un hydroxyde pouvant libérer de l'eau tel que l'hydroxyde d'aluminium et d'un verre soluble, d'un gel de silice ou d'un ciment magnésien.

6. Procédé selon la revendication 5, **caractérisé en ce que** la couche centrale (4) est composée de 50 à 90 % en poids d'hydroxyde pouvant libérer de l'eau tel que l'hydroxyde d'aluminium et de 10 à 50 % en poids de liant tel que le verre soluble, le gel de silice ou le ciment magnésien.

7. Procédé selon l'une quelconque des revendications précédentes, **caractérisé en ce que** la couche centrale (4) présente une épaisseur de 3 à 5 mm, de préférence de 4 à 5 mm.

8. Procédé selon l'une quelconque des revendications précédentes, **caractérisé en ce que** les dimensions extérieures de la couche centrale (4) sont de 50 à 100 cm x 150 à 200 cm, de préférence 100 cm x 200 cm.

9. Elément stratifié de protection contre l'incendie, servant en particulier de composant pour les portes coupe-feu, qui comprend au moins deux couches extérieures en laine minérale liée et au moins une couche centrale (4) en matériau inorganique, moyennant quoi la couche centrale (4) est composée d'un matériau inorganique qui libère de l'eau sous l'action de la chaleur, **caractérisé en ce que** la couche centrale (4) est un demi-produit (5) préfabriqué, disposé entre les couches extérieures (2,3) en laine minérale liée, et **en ce que** la couche centrale garde sa forme sous l'action de la chaleur.

10. Elément de protection contre l'incendie selon la revendication 9, **caractérisé en ce que** le demi-produit préfabriqué est conçu sous forme de plaques et est armé d'un renforcement poreux (6, 7) au moins sur une grande surface.

11. Elément de protection contre l'incendie selon la revendication 10, **caractérisé en ce qu'**un voile de verre ou un tissu de verre sert de renforcement (6,7) du demi-produit préfabriqué.

12. Elément de protection contre l'incendie selon l'une quelconque des revendications 9 à 11, **caractérisé en ce que** le renforcement (6,7) est prévu sur les deux grandes surfaces.

13. Elément de protection contre l'incendie selon l'une quelconque des revendications 9 à 12, **caractérisé en ce que** le demi-produit préfabriqué est composé d'un mélange d'un hydroxyde pouvant libérer de l'eau tel que l'hydroxyde d'aluminium et d'un verre soluble, d'un gel de silice ou d'un ciment magnésien.

14. Elément de protection contre l'incendie selon la revendication 13, **caractérisé en ce que** le demi-produit préfabriqué est composé de 50 à 90 % en poids d'un hydroxyde pouvant libérer de l'eau tel que l'hydroxyde d'aluminium et de 10 à 50 % en poids d'un liant tel que le verre soluble, le gel de silice ou le ciment magnésien.

15. Elément de protection contre l'incendie selon l'une quelconque des revendications 9 à 14, **caractérisé en ce que** le demi-produit préfabriqué présente une épaisseur de 3 à 5 mm, de préférence de 4 à 5 mm.

16. Elément de protection contre l'incendie selon l'une quelconque des revendications 9 à 15, **caractérisé en ce que** les dimensions extérieures du demi-produit préfabriqué sont de 50 à 100 cm x 150 à 200 cm, de préférence 100 cm x 200 cm.
